# EUROPEAN PATENT SPECIFICATION

(11) **EP 3 488 321 B1**
(45) Date of publication and mention of the grant of the patent: **05.05.2021**
(21) Application number: 17746335.3
(22) Date of filing: 21.07.2017
(51) Int. Cl.: G06F 3/01, G06T 19/00, G06F 3/0481, G06F 3/0346

(54) **DETECTING USER RANGE OF MOTION FOR VIRTUAL REALITY USER INTERFACES**
DETEKTION DES BENUTZERBEWEGUNGSBEREICHS FÜR BENUTZERSCHNITTSTELLEN MIT VIRTUELLER REALITÄT
DÉTECTION DE LA PLAGE DE MOUVEMENT D'UN UTILISATEUR POUR DES INTERFACES UTILISATEUR DE RÉALITÉ VIRTUELLE

(30) Priority: 22.07.2016 US 201662365526 P
(43) Date of publication of application: 29.05.2019
(73) Proprietor: Google LLC, Mountain View, CA 94043 (US)
(72) Inventor: FAABORG, Alexander James, Mountain View California 94043 (US); DOLIM, Scott, Mountain View California 94043 (US); CLEMENT, Manuel Christian, Mountain View California 94043 (US)
(74) Representative: Maikowski & Ninnemann Patentanwälte Partnerschaft mbB
(86) International application number: PCT/US2017/043351
(87) International publication number: WO 2018/017993

(56) References cited:
- EP-A1- 3 479 200
- US-A1- 2008 170 123
- US-A1- 2012 229 381
- US-A1- 2014 002 444
- US-A1- 2014 160 002
- US-A1- 2014 167 973
- US-A1- 2015 035 750
- US-A1- 2015 062 160
- US-A1- 2016 025 981

## Description

### TECHNICAL FIELD

This description generally relates to methods and devices for detecting range of motion capabilities for users accessing virtual reality (VR) content.

### BACKGROUND

Many virtual reality environments accept user input from a wide range of input devices, as, for example, disclosed in US 2014/160002 A1 or US 2015/062160 A1. For example, any combination of mobile devices, keyboards, controllers, and tracked hand movements can be used to provide input to a virtual reality (VR) space. Providing input in the VR space can also entail a combination of motions and device manipulations. Each motion and device manipulation can be performed by a user accessing the VR space.

### SUMMARY

A system of one or more computing devices can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, a computer-implemented method includes generating a virtual environment with a first electronic device that is communicably coupled to a second electronic device, tracking movement of the second electronic device in an ambient environment, and determining, using one or more sensors, a range of motion associated with the movement of the second electronic device in the ambient environment. The method may further include correlating the range of motion associated with the ambient environment to a range of motion associated with the virtual environment, determining, for a plurality of virtual objects, a virtual configuration adapted to the range of motion associated with the virtual environment, and triggering of rendering, in the virtual environment in the first electronic device, the plurality of virtual objects according to the virtual configuration.

Implementations may include one or more of the following features. The method in which at least one of the plurality of virtual objects is part of a user interface showing the virtual environment and options associated with the virtual environment, and in which determining the virtual configuration includes adapting the user interface to match the range of motion associated with the virtual environment. The method in which correlating the range of motion associated with the ambient environment to a range of motion associated with the virtual environment includes determining a physical aspect of a user accessing at least one of the first electronic device or the second electronic device, translating at least one capability associated with the physical aspect from the ambient environment to the virtual environment, and providing virtual content in the virtual environment according to the at least one translated capability. In some implementations, the physical aspect of a user accessing the first electronic device includes at least one of a detected position within the virtual environment, a posture, a detected position within a physical space, or a detected height and a reach distance pertaining to an arm span associated with the user. In some implementations, correlating the range of motion associated with the ambient environment to a range of motion associated with the virtual environment further includes enabling the at least one capability in the virtual environment to account for a seated position of the user, in response to determining that a user accessing the first electronic device is in a seated position while accessing the first electronic device.

In some implementations, the method may include determining, for the plurality of virtual objects, a virtual configuration adapted to the range of motion associated with the virtual environment includes determining the physical aspect of the user associated with the first electronic device, and estimating a reach zone using the physical aspect of the user and the range of motion associated with the ambient environment. The reach zone may be used as an area within reach of the user accessing the first electronic device and in which to place a plurality of virtual objects in the virtual environment. In some implementations, the range of motion associated with the virtual environment is determined using an accelerometer executing on the second electronic device. In some implementations, tracking movement of the second electronic device in the ambient environment includes tracking lateral movement of the second electronic device by capturing images of a user accessing the first electronic device and the second electronic device in the ambient environment. In some implementations, the first electronic device is an HMD device and the second electronic device is a portable electronic device.

In some implementations, determining, for the plurality of virtual objects, a virtual configuration adapted to the range of motion associated with the virtual environment includes determining a height of a user accessing the first electronic device, and estimating a reach zone using the height of the user and the range of motion associated with the ambient environment. The reach zone may be used as an area within reach of the user accessing the first electronic device and in which to place a plurality of virtual objects in the virtual environment.

In some implementations, the method may include determining, for a plurality of virtual objects, a virtual configuration adapted to a range of motion associated with the virtual environment includes detecting a vertical offset of the first electronic device and using the vertical offset to place a plurality of objects within reach of a user accessing the first electronic device.

Implementations of the described systems may include hardware, a method or process, or computer software on a computer-accessible medium.

The details of one or more implementations are set forth in the accompanying drawings and the description below. Other features will be apparent from the description and drawings, and from the claims.

### BRIEF DESCRIPTION OF THE DRAWINGS

FIGS. 1A-1B are diagrams depicting examples of a user interacting with a virtual reality (VR) space.
FIGS. 2A-2B are block diagrams depicting examples of a user interacting with a VR space.
FIG. 3 is a block diagram depicting an example of VR equipment communicably coupled to an HMD device in a VR space useful for understanding the invention.
FIG. 4 is an example implementation of a virtual reality system including a head mounted display and a controller, in accordance with implementations and techniques as described herein.
FIG. 5 is a flow chart diagramming one implementation of a process to detect a range of motion and present virtual content according to the range of motion.
FIG. 6 shows an example of a computer device and a mobile computer device that can be used to implement the techniques described herein.

Like reference symbols in the various drawings indicate like elements.

### DETAILED DESCRIPTION

The invention is defined by the independent claims; dependent claims define preferred embodiments.

In virtual reality (VR) applications, a user may be placed in an environment that is not physically or ergonomically adapted to fit the physical size and/or the available range of motion of the user. This may render the user unable to comfortably interact with virtual objects and applications in the VR space. Environment assessment and the provision of automatic adjustments to such an environment can enable users to comfortably interact with the virtual objects and applications in the VR space. Without the aforementioned automatic adjustments, the user may have to change positions (e.g., seated to standing or vice versa and/or twist or turn the body) in order to be able to interact with the application. The systems and methods described herein can provide a determination for whether a particular application is usable for a particular user based on the user's current physical position. The systems and methods can provide the ability to carry out minor position adjustments to aid in user comfort, and may additionally provide major positional adjustments to aid in making the application usable for the user from the user's current physical position (e.g., standing sitting, etc.).

By assessing a range of motion available to a user in a seated, horizontal, or standing position, the systems and methods described in this disclosure can adapt the user interface showing the VR space and options associated with the VR space to match the available range of motion associated with a user. For example, if the systems and methods described herein detect that a user is in a chair with a 360 degree range of turning motion and/or a particular radius of reach from the body of the user, a specific user interface can be rendered and provided in an HMD device to the user in the VR space based on the seated user and detected range and reach of the user. Alternatively, if it is determined that the user is standing, a different user interface may be triggered for rendering and provided for display in the HMD device. Similarly, if it is determined that the user is lying down, another different user interface may be triggered for rendering and provided for display in the HMD device.

In some implementations, a user range of motion can be detected by an accelerometer associated with one or more devices communicably coupled to elements that are generating the VR space. Such an accelerometer may be part of a mobile device communicably coupled to an HMD device displaying the VR space. In some implementations, approximations for a range of motion associated with the user can be made using cameras, tracking systems, tracking sensors, and the like.

The systems and methods described in this disclosure can automatically assess users and VR equipment and adapt a VR space, VR equipment, VR objects, and/or associated VR application content to particular physical properties or features associated with the user accessing the VR space. The automatic assessment and/or adjustment of the VR application and associated configuration of hardware used to interact in a VR application can enable the user to accomplish daily computing activities with fewer ergonomic, configuration, and logistics interruptions during the day, than if the system were not configured for the user. The addition of such automation to virtual reality environments (e.g., VR spaces) and associated equipment can provide for relatively fast configuration and display of virtual content and interfaces, controls, and equipment used in the VR space. For example, automated analysis and placement of controls, user interfaces, monitors, chairs, virtual content, and the like can provide a computing environment (physical and virtual) that is individually tailored to the user accessing the computing environment.

In some implementations, the adaptation of the VR space and associated equipment can be performed, in response to detecting user movements and/or ranges of motion utilized by the user over time. For example, in response to detection of user movements (e.g., via movement and location tracking, eye-gaze tracking, device tracking, and/or sensor measurements, etc.), the systems and method described in this disclosure can render content (or trigger rendering of content) in the VR application according to physical aspects of the user accessing the VR application. The physical aspects of the user can include, but are not limited to a detected position within the VR space, a detected position within physical space (e.g., standing, sitting, moving, etc.), a detected or user-inputted height, a detected or calculated reach distance pertaining to any or all of the user's height arm span, head turn angle, eye gaze, mobility capabilities, etc.

The systems and methods described herein can additionally detect particular postures of users interacting with the VR space, associated equipment, and VR application, and can provide particular interactions, VR content, and options based on the detected postures. For example, the systems and methods can detect whether the user is seated or standing. The detection can be used to provide or prohibit specific mobility options. For example, if the user is seated during interaction in a virtual game, the VR application (using associated controller or other hardware or software based sensors) can determine that the user is seated and can provide additional movement options or modify movement options for the seated position. If the VR application (using associated controller or other hardware or software based sensors) determines that the user is standing during the same virtual game, the VR application can provide different movement options. Thus, if the virtual game allows the user to physically walk and turn around to interact with application content provided in the VR space, then the VR application can engage such features and allow additional standing only types of interactive options. If instead, it is detected that the user is seated (e.g., on an airplane, at a desk, etc.), the VR application can disengage features that involve walking or turning around and can provide different, more suitable options that may be convenient for a seated user.

In some implementations, the systems and methods described in this disclosure can detect a pattern of user movements over time and use the detected pattern to determine a range of available motion for a user and/or a restricted range of motion for the user. For example, detecting a pattern can include detecting that the user is seated, standing, moving, reaching, turning around, and/or gazing around. In some implementations, the pattern can be used to ascertain that a user is in a seated position in a chair with side-to-side movement capabilities. For example, the pattern can indicate that the user is in a swivel chair that has the capabilities of turning side-to-side in a circle (or part of a circle).

In some implementations, a detected pattern can be used to determine whether the user is standing or walking. In other implementations, the pattern can be used to determine that the user is whether the user is in a seated or standing position. The pattern detection and determination of different patterns can be implemented using one or more machine learning algorithms. In some implementations, the pattern detection and pattern differentiation can be performed using lookup tables, for example, by measuring ranges of user motion and comparing such motions with known movements and associated ranges (e.g., limitations) of the known movements.

In some implementations, the systems and methods described herein can access sensors associated with particular VR hardware to detect physical aspects about a user accessing the VR space. For example, an accelerometer on a user's mobile device communicably coupled to the VR space can be analyzed to detect whether the user is seated in a stationary or swivel chair. In particular, if the systems described herein detect that the accelerometer of the mobile device is capturing measurements that exhibit stable side-to-side motions, the systems can determine that the user is in a swivel chair. Such detection can be used to physically place virtual content and objects in the VR space to be within range of a user's grasp (e.g., reach) or view. In some implementations, the systems and methods described herein can determine whether the user is seated or standing. If it is determined that the user is seated, the VR software may be configured to place objects in the VR space below a particular height (e.g., three feet) to accommodate convenient reaching and/or interactions with the VR space for a seated user. In some implementations, particular content (e.g., virtual objects) can be snapped into a user-accessible area by shrinking, stacking, and/or otherwise organizing the virtual objects such that they are within reach of the seated user.

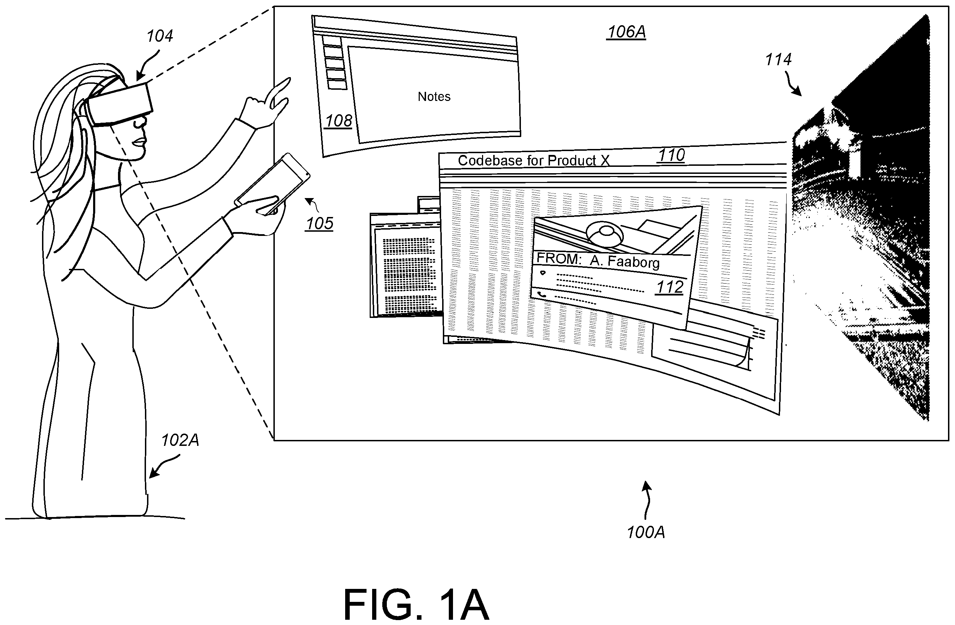

FIGS. 1A-1B illustrate examples of a user interacting with a VR space 100A-B. The example implementations shown in FIGS. 1A-1B will be described with respect to one or more users wearing an HMD device that blocks out (e.g., substantially blocks out) the ambient environment, so that the HMD device generates a virtual environment/VR space, with the user's field of view confined to the VR space generated by the HMD device. However, the concepts and features described herein may also be applied to other types of HMD devices, and other types of virtual reality environments and augmented reality environments. In addition, the examples shown in the figures described herein may include a user illustrated as a third-person view of the user wearing an HMD device and holding controllers, computing devices, etc.

In the depicted examples, a number of application windows with interactive content are shown. Each VR space 100A-B includes applications with static and/or interactive content. The VR spaces 100A-B shown in FIGS. 1A-B represent an environment that allows a user (e.g., user 102A or 102B) to move around a virtual visualization of any number of virtual application windows and/or other VR content. Proper physical placement of the virtual application windows and the VR content may facilitate user interaction with such content and may enhance the user experience in the VR space.

In general, the VR spaces 100A-B may be generated by a system including, for example, an HMD device 104 worn by a user, as shown in FIGS. 1A-1B. The HMD device 104 may be controlled by various different types of user inputs, and the user may interact with the VR space generated by the HMD device 104 through various different types of user inputs, including, for example, hand/arm gestures, head gestures, manipulation of the HMD device 104, manipulation of a portable controllers operably coupled to the HMD device 104, and the like. The user may carry (or be near) a portable electronic device 105 that can be communicably coupled to HMD device 104.

The example implementations shown in FIGS. 1A-1B will be described with respect to a user wearing an HMD device that substantially blocks out the ambient environment, so that the HMD device generates a virtual environment (e.g., VR space), with the user's field of view confined to the virtual environment generated by the HMD device. However, the concepts and features described below with respect to FIGS. 1A-1B may also be applied to other types of HMD devices, and other types of virtual reality environments and augmented reality environments, as described below.

As shown in FIG. 1A, a user 102A is wearing the HMD device 104 is facing into a room defining a VR space 106A. The HMD device 104 may capture images and/or collect information defining features in the user's ambient environment to depict virtual content in the VR space 106A. The images and information collected by the HMD device 104 may then be processed by the portable device 105 in VR space 106A. In addition, information can be obtained from sensors (not shown) to update the virtual content based on user interaction in the VR space 106A. The sensors may track the hands, feet, or other body part location belonging to the user as well as rotations of such elements with six degrees of rotational freedom.

The sensors can detect and track user position, movement, and interaction in the VR space 106A. In some implementations, the sensors may be part of device 105 or another device. The tracking can be used to dynamically adapt VR application ergonomics to fit particular physical properties of user 102A for example. As shown, user 102A may be interacting in the VR space 106A with a number of applications open and available user selections and interactions. The systems described herein can determine that the user 102A is standing and as such, can provide particular placement of content, menus, controls, etc. in which the user can reach based on her standing position. For example, the applications 108, 110, 112, and 114 can be provided within a reachable distance from the user. The reachable distances may pertain to physical properties of the standing user 102A, including but not limited to, height, arm span, head turn, eye gaze, mobility capabilities, and the like.

The user 102A may be enjoying a virtual experience accessing application 108, 110, and 112 within the VR space 106A and may also be enjoying a movie shown in application 114. The systems described herein can determine distances between the user 102A in the VR space to virtual objects (e.g., applications 108-114 in the depicted example). The distance can be used to place objects, controls, menus, and other VR objects within the VR space 106A. The placement can be tailored to each particular user.

In some implementations, the systems described herein may determine a reach zone for a user. The reach zone may pertain to a user's maximum arm span or reachable area within a physical space. Such a reach area may correlate between the physical space and the virtual space and can be translated from the physical space to virtual space. For example, the systems can calculate a height of the user and can divide the height in about half to obtain an estimated reach zone. This can be configured for each user and may provide triggers for distance placement rules for applications and objects provided to users in the VR space. Similarly, the systems can use a height of particular three-dimensional (3D) surfaces that the user may interact with in the physical or VR space to determine comfortable and ergonomic placement of other physical or VR objects. For example, if the user is playing a musical instrument such as the drums or piano. The hand placement and interaction with the instrument can be used to provide other interaction or user interface components. For example, the systems can use the instrument interaction and placement as a way to determine keyboard placement and interaction, menu placement, head placement, eye line, button or controller placement, list placement, and the like.

In some implementations, a physical aspect of a user can be ascertained by the systems described herein. For example, the system 300 can be used to detect or determine one or more physical aspects of a user accessing an electronic device (e.g., HMD 104) including, but not limited to a detected position within the virtual environment for the user, a posture of the user, a detected position within a physical space for the user, a detected height of the user, and/or a reach distance pertaining to an arm span associated with the user. Other physical aspects of a user accessing the virtual environment can be detected by the systems, sensors, and devices described herein.

Upon detecting one or more physical aspects of the user, the system 300 can correlate the range of motion associated with the ambient environment to a range of motion associated with the virtual environment. The correlation can include determining that the user is standing or seated in the ambient (e.g., physical) environment and using such information to ascertain useful ranges of motion for the user in the virtual environment. For example, in response to determining that a user accessing the first electronic device (e.g., an HMD device) is seated while accessing the HMD device, the system 300 can enable at least one capability in the virtual environment to account for the seated position of the user. An example capability may include a reach space (or limit) for the arm of the user. The system 300 may take into account the limits or capabilities of the physical reach available to the user and may place content and/or controls within the limits of the reach available to the user.

In the depicted example of FIG. 1A, the system can determine (e.g., detect using sensors) that the user 102A is standing, and as such can calculate a distance from (e.g., applications 108, 110, 112, 114) to the hand of the user. The calculation can be be used to provide a VR space that is ergonomic and useful to the user such that the user may walk toward, and interact with, applications 108-114 in a comfortable fashion without overextending to reach one of applications 108-114. In some implementations, during the interaction shown in VR space 106A the application 112 may be provided in front of application 110 to notify the user of an email. A distance determination based on the user 102A can be made to determine a convenient placement of the notification of the email from 'A. Faaborg,' generated by application 112. The determination can provide the application 112 in an area that is both reachable and comfortable for the user 102A while the user is in a standing position.

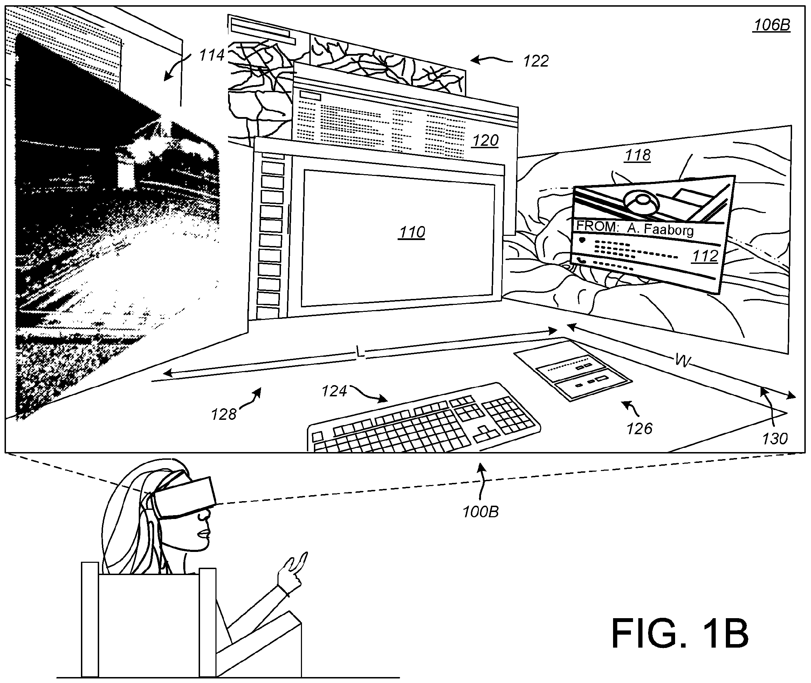

Referring to FIG. 1B, a user 102B is seated in a chair 116 and accessing applications 108-114 in a VR space 106B, similar to FIG. 1A. In this example, the applications 108-114 are arranged for the comfort and reach zone of a seated user (e.g., user 102B). For example, the applications 108-114 have been arranged in a fashion from left to right as if the user were seated at a desk. Additional applications 118, 120, and 122 are stacked behind application 110 and application 112 for ease of reach of the seated user 102B, should the user wish to access applications 118-122. The VR space 106B additionally includes a keyboard 124 and virtual menu 126. The keyboard 124 may be virtual and can be shown in a position for the user to reach and type on without having to adjust the keyboard. The virtual menu 126 is provided on a virtual desk such that the user can reach out to select a number of menu items for interacting in the VR space 106B. The placement of applications 108-122, keyboard 124, and virtual menu 126 can be determined based on user capabilities related to movement and/or confinement. For example, the systems described herein can determine that the user is seated and able to move side-to-side in the seated position. In response to the determination, the VR space 106B can be provided in a manner comfortable for a seated user. In some implementations, the systems can detect specific user distances, lengths, and capabilities and can use such information to provide a VR space that is adapted and configured for the specific user. In some implementations, the information may include measurements associated with the user. The information may be used to estimate a length and/or width of particular elements in the VR space 106B. For example, the seated user may have a maximum reach zone which may dictate a length 128 and width 130 of the virtual desk and application layout placed in front of the user.

In one non-limiting example, a movie application 114 can be displayed to a standing user, as shown in FIG. 1A. The movie application 114 is a distance from the user on a far wall of the VR space 106A. Since the user is determined to be standing and able to walk around in the VR space 106A, the user can easily access content in the movie application 114 by turning or walking toward the application 114. By contrast, the seated user 102B may have difficulty viewing content shown in application 114 in FIG. 1A. The seated user 102B may be seated low and too far away to access and interact with the application 114. Accordingly, the systems described herein can detect that the user 102B is seated and can modify the layout of the VR space from the content shown in VR space 106A to VR space 106B. This may be convenient for the seated user 102B and can allow the user to avoid eyestrain and/or neck strain because the application 114 shown in FIG. 1B is closer and adapted to fit the workspace (e.g., personal surroundings) of the seated user 102B. Similar adaptations can be made to modify VR spaces for mobile and non-mobile user scenarios.

In some implementations, the VR space 106B can be configured to provide movable virtual content that functions to provide access to the virtual content for a moving user or a stationary user. For example, the movable virtual content can include virtual objects, applications, controls, and/or other graphical elements displayable in a VR space. In some implementations, the movable virtual content can be configured for interaction with a user seated in a swivel chair that allows for side to side swivel movements. In some implementations, the movable virtual content can be configured to move in directions conducive to a reach span associated with a seated user. In some implementations, the moveable virtual content can be configured for interaction with a standing and/or mobile user.

In some implementations, the movable virtual content can be configured to be provided at appropriate distances and time thresholds conducive to a moving user. In some implementations, the systems described throughout this disclosure can detect changes in the position (e.g., seating, standing, moving) of the user and can use the detected change to provide updated rules and configurations associated with how virtual content is moved and configured within the VR space 106B.

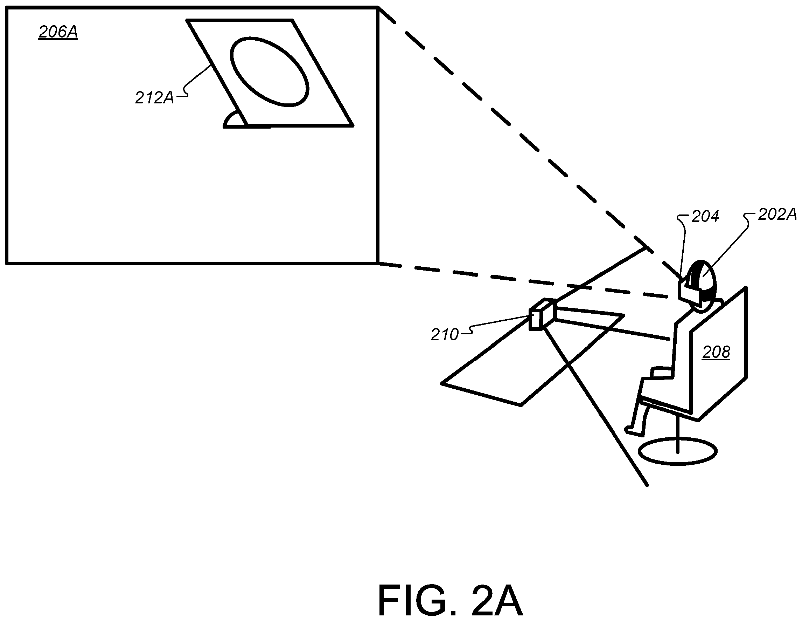

As shown in FIG. 2A, a user 202A is wearing an HMD device 204 and is facing into a room defining a VR space 206A. The user 202A is seated in a chair 208 and tracking system 210 can detect that the user 202A is seated. In one non-limiting example, the tracking system can use location data associated with VR devices (e.g., controllers, HMD devices, mobile devices, etc.) as a basis to correlate data such as display information, safety information, user data, or other obtainable data. This data can be used to provide ergonomically positioned virtual content for user 202A accessing the VR space 206A.

In some implementations, the tracking system 210 can be used to track one or more devices used to access the VR space 206A. The devices may be tracked based on position, velocity, and/or acceleration data obtainable from particular computing devices, controllers, and/or base station devices represented in the VR space. For example, data may be obtained from an inertial measurement unit (IMU) associated with one or more devices while location data may be obtained from one or more tracked object (e.g., controllers, HMD devices) and/or base stations associated with the VR space 206A.

Additional data may also be obtained from a number of onboard sensors associated with devices accessing the VR space 206A. Such data may pertain to accelerometer and gyroscope data, orientation data, correction data, and/or other sensor data indicating general or specific location information. The systems described herein can use such data to correlate six degrees of freedom of positional information for a tracked object within a predefined range to one or more other devices within the predefined range. The predefined range may be the entire VR space, a subset of the VR space, or other measurable range with respect to a user accessing the VR space.

In some implementations, the systems and methods described herein can access sensors associated with particular VR hardware to detect particular physical aspects about a user accessing the VR space 206A. For example, an accelerometer on a user's mobile device communicably coupled to the VR space can be analyzed to detect whether the user is seated in a stationary or swivel chair. If the systems determine that the user 202A is in a seated chair 208, then the systems can depict virtual content 212A in an angled position to accommodate viewing of the seated user 202A. In particular, if the systems described herein detect that the accelerometer of a mobile device belonging to user 202A is capturing measurements that exhibit side-to-side motions that do not change in a vertical direction, the systems can determine that the user 202A is in a swivel chair. Such detection can be used to physically place the virtual content 212A in the VR space 206A to be within range of the grasp and/or viewable area associated with the user 202A.

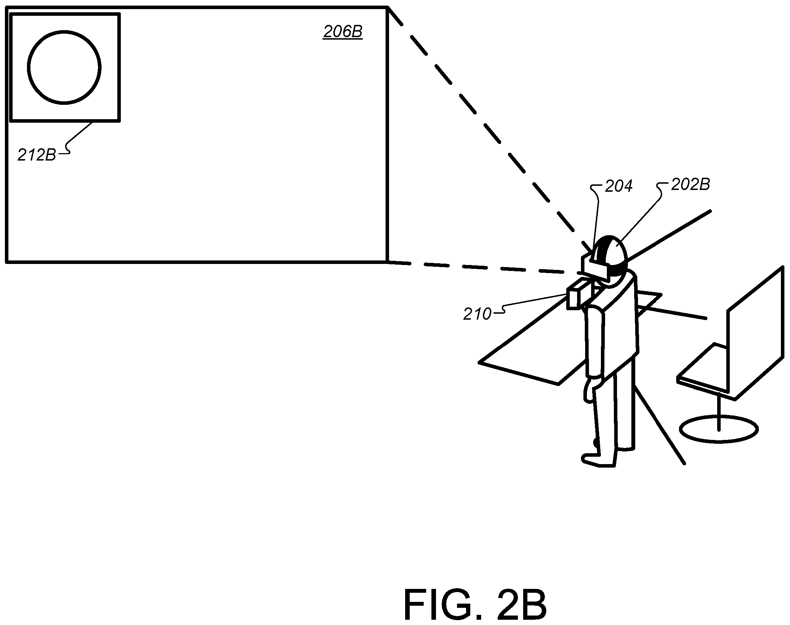

The systems can instead determine that a user (e.g., user 202B in FIG. 2B) is standing, as shown in FIG. 2B. In this example, a VR space 206B can be provided to the user in HMD device 204 with the controls and virtual content 212B in an area of the VR space 206B that is out of reach because the user 202B can walk to the content 212B to interact or modify the content 212B. In addition, the virtual content 212B may not be configured to be angled toward a seated user, since user 202B is determined to be standing.

In some implementations, application developers may implement variables and rules for properties of virtual content (e.g., 3D virtual objects or applications) in a VR application. For example, application developers may configure for any number of virtual objects one or more configurable aspects based on detected user properties. Such user properties can include height, weight, posture, arm length, physical ability or disability, walking speed or movement speed, user position (e.g., sitting, standing, lying down), etc. Any or all user properties can be used to trigger particular modes or options for virtual objects in the VR space.

In one non-limiting example, the user 202B may have a mobile phone in her pocket (not shown). The mobile phone can include an accelerometer or other sensor to detect that the user is standing and walking around the ambient environment. As shown in FIG. 2B, the systems can similarly use one or more sensors (e.g., location system 210) to detect that the user 202B is standing based on detected walking movement around the ambient environment. The motion capabilities can be estimated or directly measured for use in configuring virtual interactions and virtual object placement in the environment of user 102B.

In some implementations, the systems and methods described herein can be used to orient how particular video (e.g., spherical video) is shown to a user in VR space. For example, a director may create a spherical video and can determine vertical and horizontal placement of the scene displayed in an HMD device based on user range of motion (or lack of range of motion). In particular, if the systems described herein detect that a user is seated in a stationary chair, the systems can be configured to reset particular next scene views for the spherical video. Accordingly, the video can provide a viewpoint directly in front of the user for each new scene. That is, the video can be played differently for each user based on detected user qualities and ranges of motion.

In some implementations, VR content can be placed according to user height. The HMD device, tracking systems, and or cameras can be used to detect the vertical position of the HMD device and can provide VR content in line with the detected vertical position. For example, a user sitting in a bean bag may be using an HMD device at about two feet off the ground while a standing user may be using the HMD device at anywhere from about three feet to about six feet and the systems described herein can automatically detect such distances to display VR content in the HMD device at a specific, user-based height.

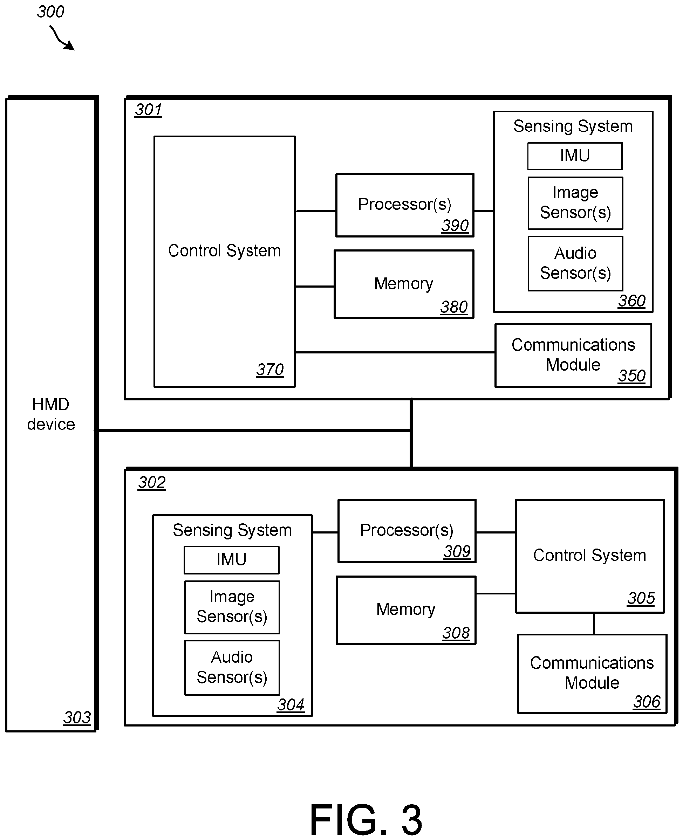

FIG. 3 is a block diagram depicting controllers communicably coupled to an HMD device (e.g., HMD device 303) in a VR space. In operation, system 300 can be configured to provide a VR space housing any number of virtual objects that can be manipulated with VR applications software, computers, and controller devices configured to interact with the VR space. For example, controllers 301 and 302 may interface with HMD device 303 to generate an immersive virtual environment. The controller 301 and the controller 302 may be paired with HMD device 303, for example, to establish communication between the devices and to facilitate user interaction with the VR space. In some implementations, neither controller 301 and 302 is paired to HMD device 303, but each are instead tracked by a tracking system (e.g., tracking system 110) in a VR application or another external tracking device.

As shown in FIG. 3, the controller 301 includes a sensing system 360 and a control system 370. The sensing system 360 may include one or more different types of sensors, including, for example, a light sensor, an audio sensor, an image sensor, a distance/proximity sensor, a positional sensor (e.g., an inertial measurement unit (IMU) including a gyroscope and accelerometer) and/or other sensors and/or different combination(s) of sensors, including, for example, an image sensor positioned to detect and track eye gaze associated with a user. The control system 370 may include, for example, a power/pause control device, audio and video control devices, an optical control device, a transition control device, and/or other such devices and/or different combination(s) of devices. The sensing system 360 and/or the control system 370 may include more, or fewer, devices, depending on a particular implementation.

The controller 301 may also include at least one processor 390 in communication with the sensing system 360 and the control system 370, a memory 380, and a communication module 350 providing for communication between controller 301 and another, external device, such as, for example, controller 302 and/or HMD device 303.

Controller 302 may include a communication module 306 providing for communication between controller 301 and another, external device, such as, for example, HMD device 303. In addition to providing for the exchange of data between controller 301 and controller 302, and HMD device 303, the communication module 306 may also be configured to connect and/or communicate with a number of other electronic devices, computers, and/or controllers accessible to the VR space and system 300.

The controller 302 may include a sensing system 304 including an image sensor and an audio sensor, such as is included in, for example, a camera and microphone, an IMU, a touch sensor such as is included in a touch sensitive surface of a controller, or smartphone, and other such sensors and/or different combination(s) of sensors. At least one processor 309 may be in communication with the sensing system 304 and a control system 305. The control system 305 may have access to a memory 308 and can control overall operation of controller 302.

Similar to controller 301, the control system 305 of controller 302 may include, for example, a power/pause control device, audio and video control devices, an optical control device, a transition control device, and/or other such devices and/or different combination(s) of devices. In general, the systems and methods described in this disclosure can track user hands or controllers 301 and 302 and analyze user interaction patterns and gestures associated with such hands and/or controllers 301 and 302 in the VR space to determine the intent of such interaction patterns and gestures.

In some implementations, the systems and methods described herein can be used to detect user limitations in movement. Such limitations can be configured as rules or triggers to provide virtual content to the user in a particular manner. In some implementations, if the systems detect that the user moves about ten degrees to the left and right of a front center location of the user in her ambient environment. The systems can infer that the range is a limitation and can ensure that controls, objects, and other virtual content be placed within the view and peripheral view available to the twenty degree space of available movement.

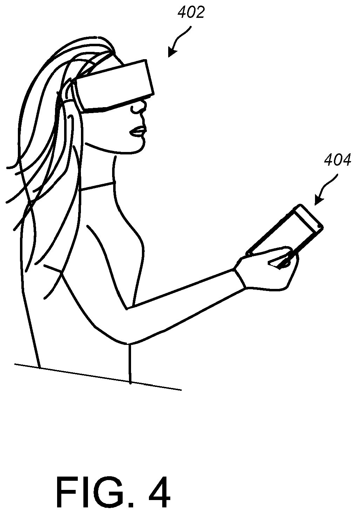

FIG. 4 is an example implementation of a virtual reality system including a head mounted display and a controller, in accordance with implementations and techniques as described herein. In the example implementation shown in FIG. 4, a user wearing an HMD device 402 is holding a portable electronic device 404. The portable electronic device 404 may be, for example, a controller, a smartphone, a joystick, or another portable controller(s) that may be paired with, and communicate with, the HMD device 402 for interaction in the VR space generated by the HMD device 402 (and/or other virtual reality hardware and software). The portable electronic device 404 may be operably coupled with, or paired with the HMD 402 via, for example, a wired connection, or a wireless connection such as, for example, a Wi-Fi or Bluetooth connection. This pairing, or operable coupling, of the portable electronic device 404 and the HMD device 402 may provide for communication between the portable electronic device 404 and the HMD device 402 and the exchange of data between the portable electronic device 404 and the HMD device 402. This may allow the portable electronic device 404 to function as a controller in communication with the HMD device 402 for interacting in the VR space generated by the HMD device 402. That is, the portable electronic device 404 may be manipulated in a plurality of different manners. Manipulation of the portable electronic device 404 may be translated into a corresponding selection, or movement, or other type of interaction, in the immersive virtual environment generated by the HMD device 402. This may include, for example, an interaction with, manipulation of, or adjustment of a virtual object, a change in scale or perspective with respect to the virtual environment, a movement (e.g., navigation, teleportation, transport) of the user from a current location in the virtual environment to a selected destination or feature in the virtual environment, and other such interactions.

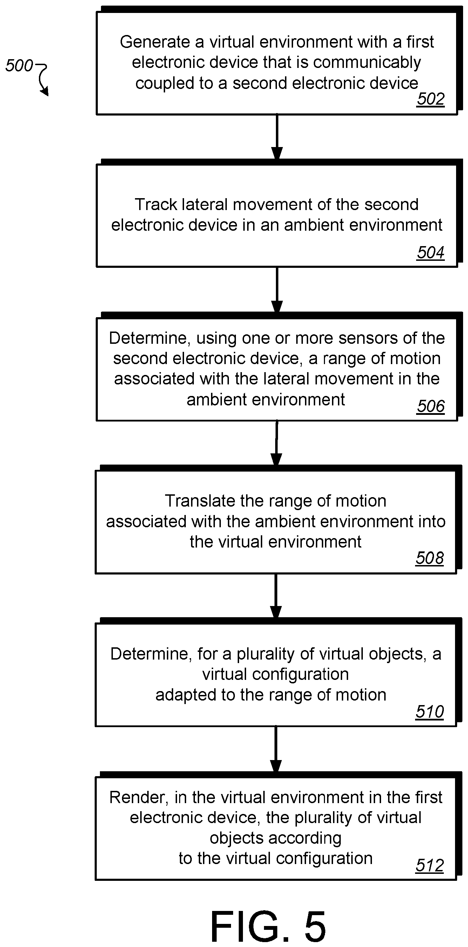

FIG. 5 is a flow chart diagramming one embodiment of a process 500 to detect a range of motion and present virtual content according to the range of motion. At block 502, the process 500 may include generating a virtual environment with a first electronic device that is communicably coupled to a second electronic device. For example, an HMD device 402 may be generating such a virtual environment and may be communicatively and/or operably coupled to a portable electronic device 404. The portable electronic device 404 may belong to the user and may be tracking movement based on user movement. For example, at block 504, the process 500 may include tracking movement of the second electronic device (e.g., the portable electronic device 404) in an ambient environment. In some implementations, the movement may be a lateral (e.g., side-to-side) movement in a manner to indicate that the user is seated in a swivel chair.

In some implementations, tracking movement of the second electronic device in the ambient environment can include tracking lateral movement by capturing images of a user accessing the first electronic device (e.g., HMD device 402) and the second electronic device (e.g., portable electronic device 404) while the user is in the ambient environment.

In some implementations, tracking movement of the second electronic device in the ambient environment includes analyzing accelerometer data stored on the second electronic device. For example, accelerometer data can be detected and used to determine whether a user accessing devices 402 and 404 is seated in a swivel chair.

At block 506, the process 500 includes determining, using one or more sensors, a range of motion associated with the movement in the ambient environment. For example, any number of sensors communicably coupled with device 402 or device 404 may track movement and such movement can include a specific range of motion over time. In some implementations, the sensors may be associated with the first electronic device. In some implementations, the sensors may be associated with the second electronic device. The systems described herein can track the movement over time to ascertain the range of motion. The range of motion may be used to determine user ranges of reach and for virtual object placement. In some implementations, the range of motion can be determined using an accelerometer executing on the second electronic device (e.g., portable electronic device 404.

At block 508, the process 500 includes correlating and/or translating the range of motion associated with the ambient environment to a range of motion associated with the virtual environment. For example, the systems described herein can determine whether a user associated with the first electronic device and the second electronic device is seated or standing while accessing the first electronic device. If the user is seated, the process 500 can correlate an available range of motion that the user has in a physical world (i.e., the ambient environment) to a range of motion in the virtual environment such that the user is able to reach virtual content from the seated position. The correlation can include translating the range of motion from the ambient environment to the virtual environment. The translation may include calculating distances that the user can move in (or reach within) the ambient environment and translating such distances into the virtual environment. The systems described herein can provide virtual content and/or controls within detected (or determined) locations within the virtual environment by correlating the ranges of motion between environments and generating and providing such content and/or controls within such ranges. In some implementations, the systems can determine whether a user accessing devices 402 and 404 is seated in a swivel chair (e.g., or other non-stationary chair or apparatus) and can provide content and/or controls that can be utilized in a seated position in the swivel chair (or other non-stationary chair or apparatus).

At block 510, the process 500 includes determining, for a plurality of virtual objects, a virtual configuration adapted to the range of motion associated with the virtual environment. For example, if the systems determine that the user is seated in a swivel chair, particular virtual content placement can be provided. Specifically, if the user is determined to be in a swivel chair, virtual objects can be placed in the virtual configuration such that the user can reach all of the virtual content (and/or user interface selections) within the determined range of available motion.

In some implementations, determining a virtual configuration adapted to the range of motion includes determining a height of a user associated with the first electronic device and the second electronic device, and estimating a reach zone based on the height of the user and the range of motion. The reach zone may be used as an area in which to place virtual objects in the virtual environment.

Such a reach zone may be defined by a location within the virtual environment in which the user can collide, reach, select, or otherwise access the plurality of virtual objects. In some implementations, determining, for a plurality of virtual objects, a virtual configuration adapted to the range of motion includes detecting a vertical offset of the first electronic device and using the vertical offset to place the plurality of objects adjacent to a user accessing the first electronic device. For example, a user's height, an HMD device height, a controller height, a hand location, or other vertical distance associated with eth user and/or the virtual environment can be used to place virtual objects in the virtual environment (e.g., VR space).

In some implementations, a mobile device (e.g., device 404) associated with a user accessing the VR space can determine a range of motion for the user based on detection of accelerometer movements associated with the user and the mobile device. The detection and analysis can be performed by the mobile device 404 to adapt a user interface for a user. In some implementations, another tracking device associated with the VR space can detect user range of motion limitations or lack of limitations and can communicate to modify particular user interface content for the user.

One example adaptation of a user interface being modified for display to the user in an HMD device, can include adapting the virtual content and/or objects to be provided at a specific viewing angle based on the determined user range of motion. In some implementations, a user interface can be provided in a way to ensure that the user is not required to be mobile to view all available content in a scene. For example, if the mobile device, tracking device, or other device in the VR space automatically detects that the user is seated in a swivel chair or that a swivel chair is within range of the user, the systems described herein can automatically be configured to provide user interface content adjusted for viewing, by the user, when seated in a swivel chair.

At block 512, the process 500 includes triggering rendering (e.g., triggering displaying), in the virtual environment in the first electronic device, any number of the virtual objects according to the virtual configuration. For example, the HMD device 402 can trigger render and display to the user, any of the virtual objects according to the virtual configuration.

In some implementations, the systems described herein can determine a step size and/or speed of a walking user to provide virtual objects or content at a precise distance from the user such that the user can reach or display the objects or content at a comfortable distance while walking or upon approaching a particular virtual object. In some implementations, the systems described herein can determine a vertical position of an HMD device being accessed by a user and can use the vertical position of the HMD device to determine an approximate height and can provide and/or trigger virtual objects or content based on the determined approximate height. In particular, if the vertical position of the HMD device is at about four feet, the systems can determine that the user is likely a child or a very short individual and can adjust content, objects, and controls according to the vertical position.

In some implementations, the systems described herein can determine that particular virtual content or objects should be adapted to the user. For example, if the systems determine that a user is repeating the same motions, but is unsuccessful at interacting with a control, a menu, or an object, the systems can determine that the repeated attempts to reach or interact appear to be failing. In response, the control, menu, or object can be adapted to better fit the user's reach, for example.

In some implementations, data can be recorded based on any and all described modifications above based on user interactions. Such data can be provided into other applications to provide ergonomics, convenience, and ease of use of the VR space to the user associated with the data. The data can be used to generate an experience for the user in several applications without the user having to modify configurations in each application.

In yet another example, the systems described herein can use tracking and stored data to intentionally move controls, menus, and objects to a new position if it is detected that the user is performing repetitive motions in a way that may injure the user. Similarly, the systems may be adapted to assess user posture and can monitor automatically placed controls, menus, and objects to encourage proper posture.

In some implementations, at least one of the plurality of virtual objects is part of a user interface showing the virtual environment and options associated with the virtual environment. In addition, determining the virtual configuration may include adapting the user interface to match the range of motion associated with the virtual environment.

In some implementations, correlating the range of motion associated with the ambient environment to a range of motion associated with the virtual environment may include determining a physical aspect of a user accessing at least one of the first electronic device (or accessing the second electronic device).

In some implementations, the physical aspect of a user accessing the first electronic device may include at least one of a detected position within the virtual environment, a posture, a detected position within a physical space, a detected height and/or a reach distance pertaining to an arm span associated with the user.

In some implementations, correlating the range of motion associated with the ambient environment to a range of motion associated with the virtual environment may include determining whether a user accessing the first electronic device is seated while accessing the first electronic device or determining whether the user accessing the first electronic device is standing while accessing the first electronic device. For example, the correlation can include translating the range of motion of the user seated in the ambient environment into a range of motion in the virtual environment that correlates to physically accessible (three-dimensional) space for the user when seated. The translation may include calculating distances that the user can move in (or reach within) the ambient environment and translating such distances into the virtual environment to become the physically accessible space. The systems described herein can provide virtual content and/or controls within detected (or determined) locations within the space of the virtual environment by correlating the ranges of motion between environments and generating and providing such content and/or controls within the locations.

In some implementations, determining, for the plurality of virtual objects, a virtual configuration adapted to the range of motion associated with the virtual environment may include determining the physical aspect of the user associated with the first electronic device, and estimating a reach zone using the physical aspect of the user and the range of motion associated with the ambient environment. The reach zone may be used as an area within reach of the user accessing the first electronic device and in which to place a plurality of virtual objects in the virtual environment.

In some implementations, determining, for the plurality of virtual objects, a virtual configuration adapted to the range of motion associated with the virtual environment may include determining a height of a user accessing the first electronic device, and estimating a reach zone using the height of the user and the range of motion associated with the ambient environment. The reach zone may be used as an area within reach of the user accessing the first electronic device and in which to place a plurality of virtual objects in the virtual environment.

In some implementations, determining, for a plurality of virtual objects, a virtual configuration adapted to a range of motion associated with the virtual environment may include detecting a vertical offset of the first electronic device and using the vertical offset to place a plurality of objects within reach of a user accessing the first electronic device.

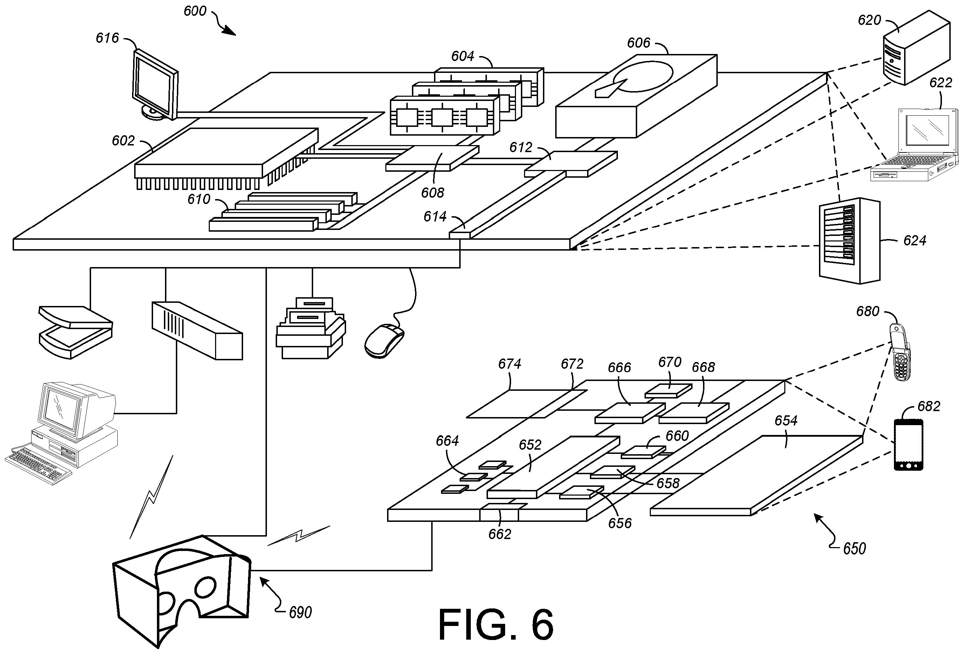

FIG. 6 shows an example of a generic computer device 600 and a generic mobile computer device 650, which may be used with the techniques described here. Computing device 600 includes a processor 602, memory 604, a storage device 606, a high-speed interface 608 connecting to memory 604 and high-speed expansion ports 610, and a low speed interface 612 connecting to low speed bus 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high speed interface 608. In other implementations, multiple processors and/or multiple buses may be used, as appropriate, along with multiple memories and types of memory. In addition, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer-or machine-readable medium, such as the memory 604, the storage device 606, or memory on processor 602.

The high speed controller 608 manages bandwidth-intensive operations for the computing device 600, while the low speed controller 612 manages lower bandwidth-intensive operations. Such allocation of functions is exemplary only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 606 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT LCD (Thin-Film-Transistor Liquid Crystal Display) or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provide in communication with processor 652, so as to enable near area communication of device 650 with other devices. External interface 662 may provide, for example, for wired communication in some implementations, or for wireless communication in other implementations, and multiple interfaces may also be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provide as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652, that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 668. In addition, short-range communication may occur, such as using a Bluetooth, Wi-Fi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.) and may also include sound generated by applications operating on device 650.

The computing device 650 may be implemented in a number of different forms, as shown in the figure. For example, it may be implemented as a cellular telephone 680. It may also be implemented as part of a smart phone 682, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 6 can include sensors that interface with a virtual reality (VR headset 690). For example, one or more sensors included on a computing device 650 or other computing device depicted in FIG. 6, can provide input to VR headset 690 or in general, provide input to a VR space. The sensors can include, but are not limited to, a touchscreen, accelerometers, gyroscopes, pressure sensors, biometric sensors, temperature sensors, humidity sensors, and ambient light sensors. The computing device 650 can use the sensors to determine an absolute position and/or a detected rotation of the computing device in the VR space that can then be used as input to the VR space. For example, the computing device 650 may be incorporated into the VR space as a virtual object, such as a controller, a laser pointer, a keyboard, a weapon, etc. Positioning of the computing device/virtual object by the user when incorporated into the VR space can allow the user to position the computing device to view the virtual object in certain manners in the VR space. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 650 can be used as input to the VR space. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 650 when the computing device is incorporated into the VR space can cause a particular action to occur in the VR space.

In some implementations, a touchscreen of the computing device 650 can be rendered as a touchpad in VR space. A user can interact with the touchscreen of the computing device 650. The interactions are rendered, in VR headset 690 for example, as movements on the rendered touchpad in the VR space. The rendered movements can control objects in the VR space.

In some implementations, one or more output devices included on the computing device 650 can provide output and/or feedback to a user of the VR headset 690 in the VR space. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 650 may appear as another object in a computer-generated, 3D environment. Interactions by the user with the computing device 650 (e.g., rotating, shaking, touching a touchscreen, swiping a finger across a touch screen) can be interpreted as interactions with the object in the VR space. In the example of the laser pointer in a VR space, the computing device 650 appears as a virtual laser pointer in the computer-generated, 3D environment. As the user manipulates the computing device 650, the user in the VR space sees movement of the laser pointer. The user receives feedback from interactions with the computing device 650 in the VR space on the computing device 650 or on the VR headset 690.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the VR space to control objects in the VR space.

Computing device 600 is intended to represent various forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method comprising:
generating a virtual environment (100A, 100B, 206A, 206B) with a first electronic device (104, 204, 402) that is communicably coupled to a second electronic device (105, 404);
tracking movement of the second electronic device (105, 404) in an ambient environment;
determining, using one or more sensors, a range of motion associated with the movement of the second electronic device (105, 404) in the ambient environment;
correlating the range of motion associated with the movement of the second electronic device (105, 404) in the ambient environment to a range of motion associated with the virtual environment (100A, 100B, 206A, 206B);
determining, for a plurality of virtual objects (108-122, 124, 126), a virtual configuration adapted to the range of motion associated with the virtual environment (100A, 100B, 206A, 206B); and
trigger rendering, in the virtual environment (100A, 100B, 206A, 206B) in the first electronic device (104, 204, 402), the plurality of virtual objects (108-122, 124, 126) according to the virtual configuration.

2. The method of claim 1, wherein at least one of the plurality of virtual objects (108-122, 124, 126) is part of a user interface showing the virtual environment (100A, 100B, 206A, 206B) and options associated with the virtual environment (100A, 100B, 206A, 206B), and wherein determining the virtual configuration includes adapting the user interface to match the range of motion associated with the virtual environment (100A, 100B, 206A, 206B).

3. The method of claim 1, wherein correlating the range of motion associated with the movement of the second electronic device (105, 404) in the ambient environment to a range of motion associated with the virtual environment (100A, 100B, 206A, 206B) includes:
determining a physical aspect of a user (102A, 102B, 202A, 202B) accessing at least one of the first electronic device (104, 204, 402) or the second electronic device (105, 404);
translating at least one capability associated with the physical aspect from the ambient environment into the virtual environment (100A, 100B, 206A, 206B); and
providing virtual content in the virtual environment (100A, 100B, 206A, 206B) according to the at least one translated capability.

4. The method of claim 3, wherein the physical aspect of a user (102A, 102B, 202A, 202B) accessing the first electronic device (104, 204, 402) includes at least one of a detected position within the virtual environment, a posture, a detected position within a physical space, or a detected height and a reach distance pertaining to an arm span associated with the user (102A, 102B, 202A, 202B) .

5. The method of claim 3, wherein correlating the range of motion associated with the movement of the second electronic device (105, 404) in the ambient environment to a range of motion associated with the virtual environment (100A, 100B, 206A, 206B) further includes:
in response to determining that a user (102A, 102B, 202A, 202B) accessing the first electronic device (104, 204, 402) is in a seated position while accessing the first electronic device (104, 204, 402), enabling the at least one capability in the virtual environment to account for the seated position of the user (102A, 102B, 202A, 202B).

6. The method of claim 3, wherein determining, for the plurality of virtual objects (108-122, 124, 126), a virtual configuration adapted to the range of motion associated with the virtual environment includes determining the physical aspect of the user (102A, 102B, 202A, 202B) associated with the first electronic device (104, 204, 402), and estimating a reach zone using the physical aspect of the user (102A, 102B, 202A, 202B) and the range of motion associated with the ambient environment, the reach zone being used as an area within reach of the user (102A, 102B, 202A, 202B) accessing the first electronic device (104, 204, 402) and in which to place a plurality of virtual objects (108-122, 124, 126) in the virtual environment (100A, 100B, 206A, 206B).

7. The method of claim 1, wherein the range of motion associated with the virtual environment (100A, 100B, 206A, 206B) is determined using an accelerometer executing on the second electronic device (105, 404).

8. The method of claim 1, wherein tracking movement of the second electronic device (105, 404) in the ambient environment includes tracking lateral movement of the second electronic device (105, 404) by capturing images of a user (102A, 102B, 202A, 202B) accessing the first electronic device (104, 204, 402) and the second electronic device (105, 404) in the ambient environment.

9. The method of claim 1, wherein the first electronic device (104, 204, 402) is an HMD device and the second electronic device (105, 404) is a portable electronic device.

10. The method of claim 9, wherein determining, for the plurality of virtual objects (108-122, 124, 126), a virtual configuration adapted to the range of motion associated with the virtual environment (100A, 100B, 206A, 206B) includes determining a height of a user (102A, 102B, 202A, 202B) accessing the first electronic device (104, 204, 402), and estimating a reach zone using the height of the user (102A, 102B, 202A, 202B) and the range of motion associated with the ambient environment, the reach zone being used as an area within reach of the user (102A, 102B, 202A, 202B) accessing the first electronic device (104, 204, 402) and in which to place a plurality of virtual objects (108-122, 124, 126) in the virtual environment (100A, 100B, 206A, 206B).

11. The method of claim 1, wherein determining, for a plurality of virtual objects (108-122, 124, 126), a virtual configuration adapted to a range of motion associated with the virtual environment (100A, 100B, 206A, 206B) includes detecting a vertical offset of the first electronic device (104, 204, 402) and using the vertical offset to place a plurality of objects (108-122, 124, 126) within reach of a user accessing the first electronic device (104, 204, 402).

12. A non-transitory, machine-readable medium having instructions stored thereon, the instructions, when executed by a processor, cause a computing device to:
generate a virtual environment (100A, 100B, 206A, 206B) with a first electronic device (104, 204, 402) that is communicably coupled to a second electronic device (105, 404);
track movement of the second electronic device (105, 404) in an ambient environment;
determine, using one or more sensors, a range of motion associated with the movement of the second electronic device (105, 404) in the ambient environment;
correlate the range of motion associated with the movement of the second electronic device (105, 404) in the ambient environment to a range of motion associated with the virtual environment (100A, 100B, 206A, 206B);
determine, for a plurality of virtual objects (108-122, 124, 126), a virtual configuration adapted to the range of motion associated with the virtual environment (100A, 100B, 206A, 206B); and
trigger rendering, in the virtual environment (100A, 100B, 206A, 206B) in the first electronic device (104, 204, 402), the plurality of virtual objects (108-122, 124, 126) according to the virtual configuration.

13. The non-transitory, machine-readable medium of claim 12, wherein correlating the range of motion associated with the movement of the second electronic device (105, 404) in the ambient environment to a range of motion associated with the virtual environment (100A, 100B, 206A, 206B) includes determining a physical aspect of a user (102A, 102B, 202A, 202B) accessing the first electronic device (104, 204, 402).

14. A system comprising:
memory; and
at least one processor coupled to the memory, the at least one processor being configured to:
generate a virtual environment (100A, 100B, 206A, 206B) with a first electronic device (104, 204, 402) that is communicably coupled to a second electronic device (105, 404);
track movement of the second electronic device (105, 404) in an ambient environment;
determine, using one or more sensors, a range of motion associated with the movement of the second electronic device (105, 404) in the ambient environment;
correlate the range of motion associated with the movement of the second electronic device (105, 404) in the ambient environment to a range of motion associated with the virtual environment (100A, 100B, 206A, 206B);
determine, for a plurality of virtual objects (108-122, 124, 126), a virtual configuration adapted to the range of motion associated with the virtual environment (100A, 100B, 206A, 206B); and
trigger rendering, in the virtual environment (100A, 100B, 206A, 206B) in the first electronic device (104, 204, 402), the plurality of virtual objects (108-122, 124, 126) according to the virtual configuration.

15. The system of claim 14, wherein
- correlating the range of motion associated with the movement of the second electronic device (105, 404) in the ambient environment to a range of motion associated with the virtual environment (100A, 100B, 206A, 206B) further includes enabling the at least one capability in the virtual environment (100A, 100B, 206A, 206B) to account for a seated position of a user (102A, 102B, 202A, 202B) accessing the first electronic device (104, 204, 402), in response to determining that the user (102A, 102B, 202A, 202B) is in a seated position while accessing the first electronic device (104, 204, 402), or tracking movement of the second electronic device (105, 404) in the ambient environment includes analyzing accelerometer data stored on the second electronic device (105, 404).

## Patentansprüche

1. Computerimplementiertes Verfahren, umfassend:
Erzeugen einer virtuellen Umgebung (100A, 100B, 206A, 206B) mit einem ersten elektronischen Gerät (104, 204, 402), das kommunikativ mit einem zweiten elektronischen Gerät (105, 404) gekoppelt ist;
Nachverfolgen einer Bewegung des zweiten elektronischen Geräts (105, 404) in einer umliegenden Umgebung;
Ermitteln, unter Nutzung eines oder mehrerer Sensoren, eines Bewegungsbereichs, der mit der Bewegung des zweiten elektronischen Geräts (105, 404) in der umliegenden Umgebung assoziiert ist;
Korrelieren des mit der Bewegung des zweiten elektronischen Geräts (105, 404) in der umliegenden Umgebung assoziierten Bewegungsbereichs mit einem mit der virtuellen Umgebung (100A, 100B, 206A, 206B) assoziierten Bewegungsbereich;
Ermitteln, für eine Vielzahl von virtuellen Objekten (108-122, 124, 126), einer virtuellen Konfiguration, die an den mit der virtuellen Umgebung (100A, 100B, 206A, 206B) assoziierten Bewegungsbereich angepasst ist; und
Auslösen des Renderns der Vielzahl von virtuellen Objekten (108-122, 124, 126) in der virtuellen Umgebung (100A, 100B, 206A, 206B) in dem ersten elektronischen Gerät (104, 204, 402) gemäß der virtuellen Konfiguration.

2. Verfahren nach Anspruch 1, wobei zumindest eines der Vielzahl von virtuellen Objekten (108-122, 124, 126) Teil einer Benutzeroberfläche ist, die die virtuelle Umgebung (100A, 100B, 206A, 206B) und mit der virtuellen Umgebung (100A, 100B, 206A, 206B) assoziierte Optionen anzeigt, und wobei das Ermitteln der virtuellen Konfiguration das Anpassen der Benutzeroberfläche beinhaltet, damit sie mit dem Bewegungsbereich, der mit der virtuellen Umgebung (100A, 100B, 206A, 206B) assoziiert ist, übereinstimmt.

3. Verfahren nach Anspruch 1, wobei das Korrelieren des mit der Bewegung des zweiten elektronischen Geräts (105, 404) in der umliegenden Umgebung assoziierten Bewegungsbereichs mit einem mit der virtuellen Umgebung (100A, 100B, 206A, 206B) assoziierten Bewegungsbereich beinhaltet:
Ermitteln eines physischen Aspekts eines Benutzers (102A, 102B, 202A, 202B), der auf zumindest eines des ersten elektronischen Geräts (104, 204, 402) oder des zweiten elektronischen Geräts (105, 404) zugreift;
Übersetzen zumindest einer mit dem physischen Aspekt assoziierten Fähigkeit aus der umliegenden Umgebung in die virtuelle Umgebung (100A, 100B, 206A, 206B); und
Bereitstellen von virtuellem Inhalt in der virtuellen Umgebung (100A, 100B, 206A, 206B) gemäß der zumindest einen übersetzten Fähigkeit.

4. Verfahren nach Anspruch 3, wobei der physische Aspekt eines Benutzers (102A, 102B, 202A, 202B), der auf das erste elektronische Gerät (104, 204, 402) zugreift, zumindest eine von einer erkannten Position innerhalb der virtuellen Umgebung, eine Körperhaltung, eine erkannte Position in einem physischen Raum oder eine erkannte Größe und eine Reichweite beinhaltet, die zu einer Armlänge gehört, die mit dem Benutzer (102A, 102B, 202A, 202B) assoziiert ist.

5. Verfahren nach Anspruch 3, wobei das Korrelieren des mit der Bewegung des zweiten elektronischen Geräts (105, 404) in der umliegenden Umgebung assoziierten Bewegungsbereichs mit einem mit der virtuellen Umgebung (100A, 100B, 206A, 206B) assoziierten Bewegungsbereich ferner beinhaltet:
in Reaktion auf das Ermitteln, dass ein Benutzer (102A, 102B, 202A, 202B), der auf das erste elektronische Gerät (104, 204, 402) zugreift, in einer sitzenden Position ist, während er auf das erste elektronische Gerät (104, 204, 402) zugreift, Aktivieren der zumindest einen Fähigkeit in der virtuellen Umgebung, die sitzende Position des Benutzers (102A, 102B, 202A, 202B) zu berücksichtigen.

6. Verfahren nach Anspruch 3, wobei das Ermitteln, für die Vielzahl von virtuellen Objekten (108-122, 124, 126), einer virtuellen Konfiguration, die an den mit der virtuellen Umgebung assoziierten Bewegungsbereich angepasst ist, das Ermitteln des physischen Aspekts des Benutzers (102A, 102B, 202A, 202B), der mit dem ersten elektronischen Gerät (104, 204, 402) assoziiert ist, und Schätzen einer Reichweitenzone unter Nutzung des physischen Aspekts des Benutzers (102A, 102B, 202A, 202B) und des mit der umliegenden Umgebung assoziierten Bewegungsbereichs beinhaltet, wobei die Reichweitenzone als ein Bereich innerhalb der Reichweite des Benutzers (102A, 102B, 202A, 202B) verwendet wird, der auf das erste elektronische Gerät (104, 204, 402) zugreift und in dem eine Vielzahl von virtuellen Objekten (108-122, 124, 126) in der virtuellen Umgebung (100A, 100B, 206A, 206B) platziert werden soll.

7. Verfahren nach Anspruch 1, wobei der mit der virtuellen Umgebung (100A, 100B, 206A, 206B) assoziierte Bewegungsbereich unter Nutzung eines Beschleunigungssensors ermittelt wird, der auf dem zweiten elektronischen Gerät (105, 404) ausgeführt wird.

8. Verfahren nach Anspruch 1, wobei das Nachverfolgen der Bewegung des zweiten elektronischen Geräts (105, 404) in der umliegenden Umgebung das Nachverfolgen der seitlichen Bewegung des zweiten elektronischen Geräts (105, 404) durch Erfassen von Bildern eines Benutzers (102A, 102B, 202A, 202B) beinhaltet, der auf das erste elektronische Gerät (104, 204, 402) und das zweite elektronische Gerät (105, 404) in der umliegenden Umgebung zugreift.

9. Verfahren nach Anspruch 1, wobei das erste elektronische Gerät (104, 204, 402) ein HMD-Gerät und das zweite elektronische Gerät (105, 404) ein tragbares elektronisches Gerät ist.

10. Verfahren nach Anspruch 9, wobei das Ermitteln, für die Vielzahl von virtuellen Objekten (108-122, 124, 126), einer virtuellen Konfiguration, die an den mit der virtuellen Umgebung (100A, 100B, 206A, 206B) assoziierten Bewegungsbereich angepasst ist, das Ermitteln einer Höhe eines Benutzers (102A, 102B, 202A, 202B), der auf das erste elektronische Gerät (104, 204, 402) zugreift, und das Schätzen einer Reichweitenzone unter Nutzung der Höhe des Benutzers (102A, 102B, 202A, 202B) und des mit der umliegenden Umgebung assoziierten Bewegungsbereichs beinhaltet, wobei die Reichweitenzone als ein Bereich innerhalb der Reichweite des Benutzers (102A, 102B, 202A, 202B) verwendet wird, der auf das erste elektronische Gerät (104, 204, 402) zugreift und in dem eine Vielzahl von virtuellen Objekten (108-122, 124, 126) in der virtuellen Umgebung (100A, 100B, 206A, 206B) platziert werden soll.

11. Verfahren nach Anspruch 1, wobei das Ermitteln, für eine Vielzahl von virtuellen Objekten (108-122, 124, 126), einer virtuellen Konfiguration, die an einen mit der virtuellen Umgebung (100A, 100B, 206A, 206B) assoziierten Bewegungsbereich angepasst ist, das Erkennen eines vertikalen Versatzes des ersten elektronischen Geräts (104, 204, 402) und das Verwenden des vertikalen Versatzes beinhaltet, um eine Vielzahl von Objekten (108-122, 124, 126) innerhalb der Reichweite eines Benutzers zu platzieren, der auf das erste elektronische Gerät (104, 204, 402) zugreift.

12. Nichtflüchtiges, maschinenlesbares Medium mit darauf gespeicherten Anweisungen, wobei die Anweisungen bei Ausführung durch einen Prozessor ein Computergerät zu Folgendem veranlassen:
Erzeugen einer virtuellen Umgebung (100A, 100B, 206A, 206B) mit einem ersten elektronischen Gerät (104, 204, 402), das kommunikativ mit einem zweiten elektronischen Gerät (105, 404) gekoppelt ist;
Nachverfolgen einer Bewegung des zweiten elektronischen Geräts (105, 404) in einer umliegenden Umgebung;
Ermitteln, unter Nutzung eines oder mehrerer Sensoren, eines Bewegungsbereichs, der mit der Bewegung des zweiten elektronischen Geräts (105, 404) in der umliegenden Umgebung assoziiert ist;
Korrelieren des mit der Bewegung des zweiten elektronischen Geräts (105, 404) in der umliegenden Umgebung assoziierten Bewegungsbereichs mit einem mit der virtuellen Umgebung (100A, 100B, 206A, 206B) assoziierten Bewegungsbereich;
Ermitteln, für eine Vielzahl von virtuellen Objekten (108-122, 124, 126), einer virtuellen Konfiguration, die an den mit der virtuellen Umgebung (100A, 100B, 206A, 206B) assoziierten Bewegungsbereich angepasst ist; und
Auslösen eines Renderns der Vielzahl von virtuellen Objekten (108-122, 124, 126) in der virtuellen Umgebung (100A, 100B, 206A, 206B) in dem ersten elektronischen Gerät (104, 204, 402) gemäß der virtuellen Konfiguration.

13. Nichtflüchtiges, maschinenlesbares Medium nach Anspruch 12, wobei das Korrelieren des Bewegungsbereichs, der mit der Bewegung des zweiten elektronischen Geräts (105, 404) in der umliegenden Umgebung assoziiert ist, mit einem Bewegungsbereich, der mit der virtuellen Umgebung (100A, 100B, 206A, 206B) assoziiert ist, ein Ermitteln eines physischen Aspekts eines Benutzers (102A, 102B, 202A, 202B) beinhaltet, der auf das erste elektronische Gerät (104, 204, 402) zugreift.

14. System, umfassend:
einen Speicher; und
zumindest einen Prozessor, der mit dem Speicher gekoppelt ist, wobei der zumindest eine Prozessor konfiguriert ist, zum:
Erzeugen einer virtuellen Umgebung (100A, 100B, 206A, 206B) mit einem ersten elektronischen Gerät (104, 204, 402), das kommunikativ mit einem zweiten elektronischen Gerät (105, 404) gekoppelt ist;
Nachverfolgen einer Bewegung des zweiten elektronischen Geräts (105, 404) in einer umliegenden Umgebung;
Ermitteln, unter Nutzung eines oder mehrerer Sensoren, eines Bewegungsbereichs, der mit der Bewegung des zweiten elektronischen Geräts (105, 404) in der umliegenden Umgebung assoziiert ist;
Korrelieren des mit der Bewegung des zweiten elektronischen Geräts (105, 404) in der umliegenden Umgebung assoziierten Bewegungsbereichs mit einem mit der virtuellen Umgebung (100A, 100B, 206A, 206B) assoziierten Bewegungsbereich;
Ermitteln, für eine Vielzahl von virtuellen Objekten (108-122, 124, 126), einer virtuellen Konfiguration, die an den mit der virtuellen Umgebung (100A, 100B, 206A, 206B) assoziierten Bewegungsbereich angepasst ist; und
Auslösen eines Renderns der Vielzahl von virtuellen Objekten (108-122, 124, 126) in der virtuellen Umgebung (100A, 100B, 206A, 206B) in dem ersten elektronischen Gerät (104, 204, 402) gemäß der virtuellen Konfiguration.

15. System nach Anspruch 14, wobei
wobei das Korrelieren des Bewegungsbereichs, der mit der Bewegung des zweiten elektronischen Geräts (105, 404) in der umliegenden Umgebung assoziiert ist, mit einem Bewegungsbereich, der mit der virtuellen Umgebung (100A, 100B, 206A, 206B) assoziiert ist, ferner ein Aktivieren der zumindest einen Fähigkeit in der virtuellen Umgebung (100A, 100B, 206A, 206B) beinhaltet, eine sitzende Position eines Benutzers (102A, 102B, 202A, 202B), der auf das erste elektronische Gerät (104, 204, 402) zugreift, zu berücksichtigen, in Reaktion auf ein Ermitteln, dass sich der Benutzer (102A, 102B, 202A, 202B) in einer sitzenden Position befindet, während er auf das erste elektronische Gerät (104, 204, 402) zugreift, oder ein Nachverfolgen der Bewegung des zweiten elektronischen Geräts (105, 404) in der umliegenden Umgebung das Analysieren von auf dem zweiten elektronischen Gerät (105, 404) gespeicherten Beschleunigungssensordaten beinhaltet.

## Revendications

1. Un procédé mis en œuvre par ordinateur, comprenant :
la génération d'un environnement virtuel (100A, 100B, 206A, 206B) avec un premier dispositif électronique (104, 204, 402) qui est couplé de manière communicante à un deuxième dispositif électronique (105, 404) ;
le suivi du mouvement d'un deuxième dispositif électronique (105, 404) dans un environnement ambiant ;
la détermination, à l'aide d'un ou plusieurs capteurs, d'une amplitude de mouvement associée au mouvement du deuxième dispositif électronique (105, 404) dans l'environnement ambiant ;
la corrélation de l'amplitude de mouvement associée au mouvement du deuxième dispositif électronique (105, 404) dans l'environnement ambiant à une amplitude de mouvement associée à l'environnement virtuel (100A, 100B, 206A, 206B) ;
la détermination, pour une pluralité d'objets virtuels (108-122, 124, 126), d'une configuration virtuelle adaptée à l'amplitude de mouvement associée à l'environnement virtuel (100A, 100B, 206A, 206B) ; et
le déclenchement du rendu, dans l'environnement virtuel (100A, 100B, 206A, 206B) dans le premier dispositif électronique (104, 204, 402), de la pluralité d'objets virtuels (108-122, 124, 126) selon la configuration virtuelle.

2. Le procédé selon la revendication 1, dans lequel au moins un de la pluralité d'objets virtuels (108-122, 124, 126) fait partie d'une interface utilisateur montrant l'environnement virtuel (100A, 100B, 206A, 206B) et les options associées à l'environnement virtuel (100A, 100B, 206A, 206B), et dans lequel la détermination de la configuration virtuelle comprend l'adaptation de l'interface utilisateur pour correspondre à l'amplitude de mouvement associée à l'environnement virtuel (100A, 100B, 206A, 206B).

3. Le procédé selon la revendication 1, dans lequel la corrélation de l'amplitude de mouvement associée au mouvement du deuxième dispositif électronique (105, 404) dans l'environnement ambiant à une amplitude de mouvement associée à l'environnement virtuel (100A, 100B, 206A, 206B) comprend :
la détermination d'un aspect physique d'un utilisateur (102A, 102B, 202A, 202B) accédant à au moins un du premier dispositif électronique (104, 204, 402) ou du deuxième dispositif électronique (105, 404) ;
la traduction d'au moins une capacité associée à l'aspect physique de l'environnement ambiant dans l'environnement virtuel (100A, 100B, 206A, 206B) ; et
la fourniture d'un contenu virtuel dans l'environnement virtuel (100A, 100B, 206A, 206B) selon au moins une capacité traduite.

4. Le procédé selon la revendication 3, dans lequel l'aspect physique d'un utilisateur (102A, 102B, 202A, 202B) accédant au premier dispositif électronique (104, 204, 402) comprend au moins une position parmi une position détectée dans l'environnement virtuel, une posture, une position détectée dans un espace physique, ou une hauteur détectée et une distance d'atteinte concernant une portée de bras associée à l'utilisateur (102A, 102B, 202A, 202B).

5. Le procédé selon la revendication 3, dans lequel la corrélation de l'amplitude de mouvement associée au mouvement du deuxième dispositif électronique (105, 404) dans l'environnement ambiant à une amplitude de mouvement associée à l'environnement virtuel (100A, 100B, 206A, 206B) inclut en outre :
en réponse à la détermination qu'un utilisateur (102A, 102B, 202A, 202B) accédant au premier dispositif électronique (104, 204, 402) est en position assise lors de l'accès au premier dispositif électronique (104, 204, 402), permettant à la au moins une capacité dans l'environnement virtuel de tenir compte de la position assise de l'utilisateur (102A, 102B, 202A, 202B).

6. Le procédé selon la revendication 3, dans lequel la détermination, pour la pluralité d'objets virtuels (108-122, 124, 126), d'une configuration virtuelle adaptée à l'amplitude de mouvement associée à l'environnement virtuel comprend la détermination de l'aspect physique de l'utilisateur (102A, 102B, 202A, 202B) associé au premier dispositif électronique (104, 204, 402), et l'estimation d'une zone de portée en utilisant l'aspect physique de l'utilisateur (102A, 102B, 202A, 202B) et l'amplitude de mouvement associée à l'environnement ambiant, la zone de portée étant utilisée comme une zone à portée de l'utilisateur (102A, 102B, 202A, 202B) accédant au premier dispositif électronique (104, 204, 402) et dans laquelle placer une pluralité d'objets virtuels (108-122, 124, 126) dans l'environnement virtuel (100A, 100B, 206A, 206B).

7. Le procédé selon la revendication 1, dans lequel l'amplitude de mouvement associée à l'environnement virtuel (100A, 100B, 206A, 206B) est déterminée en utilisant un accéléromètre s'exécutant sur le deuxième dispositif électronique (105, 404).

8. Le procédé selon la revendication 1, dans lequel le suivi du mouvement du deuxième dispositif électronique (105, 404) dans l'environnement ambiant comprend le suivi du mouvement latéral du deuxième dispositif électronique (105, 404) en capturant des images d'un utilisateur (102A, 102B, 202A, 202B) accédant au premier dispositif électronique (104, 204, 402) et au deuxième dispositif électronique (105, 404) dans l'environnement ambiant.

9. Le procédé selon la revendication 1, dans lequel le premier dispositif électronique (104, 204, 402) est un dispositif HMD et le deuxième dispositif électronique (105, 404) est un dispositif électronique portable.

10. Le procédé selon la revendication 9, dans lequel la détermination, pour la pluralité d'objets virtuels (108-122, 124, 126), d'une configuration virtuelle adaptée à l'amplitude de mouvement associée à l'environnement virtuel (100A, 100B, 206A, 206B) comprend la hauteur d'un utilisateur (102A, 102B, 202A, 202B) accédant au premier dispositif électronique (104, 204, 402), et l'estimation d'une zone de portée en utilisant la hauteur de l'utilisateur (102A, 102B, 202A, 202B) et l'amplitude de mouvement associée à l'environnement ambiant, la zone de portée étant utilisée comme une zone à portée de l'utilisateur (102A, 102B, 202A, 202B) accédant au premier dispositif électronique (104, 204, 402) et dans laquelle placer une pluralité d'objets virtuels (108-122, 124, 126) dans l'environnement virtuel (100A, 100B, 206A, 206B).

11. Le procédé selon la revendication 1, dans lequel la détermination, pour une pluralité d'objets virtuels (108-122, 124, 126), d'une configuration virtuelle adaptée à une amplitude de mouvement associée à l'environnement virtuel (100A, 100B, 206A, 206B) comprend la détection d'un décalage vertical du premier dispositif électronique (104, 204, 402) et l'utilisation du décalage vertical pour placer une pluralité d'objets (108-122, 124, 126) à la portée d'un utilisateur accédant au premier dispositif électronique (104, 204, 402).

12. Un support lisible par machine non transitoire sur lequel sont stockées des instructions qui, lorsqu'elles sont exécutées par un processeur, amènent un dispositif informatique à :
générer un environnement virtuel (100A, 100B, 206A, 206B) avec un premier dispositif électronique (104, 204, 402) qui est couplé de manière communicante à un deuxième dispositif électronique (105, 404) ;
suivre le mouvement d'un deuxième dispositif électronique (105, 404) dans un environnement ambiant ;
déterminer, à l'aide d'un ou plusieurs capteurs, une amplitude de mouvement associée au mouvement du deuxième dispositif électronique (105, 404) dans l'environnement ambiant ;
corréler l'amplitude de mouvement associée au mouvement du deuxième dispositif électronique (105, 404) dans l'environnement ambiant à une amplitude de mouvement associée à l'environnement virtuel (100A, 100B, 206A, 206B) ;
déterminer, pour une pluralité d'objets virtuels (108-122, 124, 126), une configuration virtuelle adaptée à l'amplitude de mouvement associée à l'environnement virtuel (100A, 100B, 206A, 206B) ; et
déclencher le rendu, dans l'environnement virtuel (100A, 100B, 206A, 206B) dans le premier dispositif électronique (104, 204, 402), de la pluralité d'objets virtuels (108-122, 124, 126) selon la configuration virtuelle.

13. Le support non transitoire lisible par machine selon la revendication 12, dans lequel la corrélation de l'amplitude de mouvement associée au mouvement du deuxième dispositif électronique (105, 404) dans l'environnement ambiant avec une amplitude de mouvement associée à l'environnement virtuel (100A, 100B, 206A, 206B) comprend la détermination d'un aspect physique d'un utilisateur (102A, 102B, 202A, 202B) accédant au premier dispositif électronique (104, 204, 402).

14. Un système comprenant :
une mémoire ; et
au moins un processeur couplé à la mémoire, l'au moins un processeur étant configuré pour :
générer un environnement virtuel (100A, 100B, 206A, 206B) avec un premier dispositif électronique (104, 204, 402) qui est couplé de manière communicante à un deuxième dispositif électronique (105, 404) ;
suivre le mouvement d'un deuxième dispositif électronique (105, 404) dans un environnement ambiant ;
déterminer, à l'aide d'un ou plusieurs capteurs, une amplitude de mouvement associée au mouvement du deuxième dispositif électronique (105, 404) dans l'environnement ambiant ;
corréler l'amplitude de mouvement associée au mouvement du deuxième dispositif électronique (105, 404) dans l'environnement ambiant à une amplitude de mouvement associée à l'environnement virtuel (100A, 100B, 206A, 206B) ;
déterminer, pour une pluralité d'objets virtuels (108-122, 124, 126), une configuration virtuelle adaptée à l'amplitude de mouvement associée à l'environnement virtuel (100A, 100B, 206A, 206B) ; et
déclencher le rendu, dans l'environnement virtuel (100A, 100B, 206A, 206B) dans le premier dispositif électronique (104, 204, 402), de la pluralité d'objets virtuels (108-122, 124, 126) selon la configuration virtuelle.

15. Le système selon la revendication 14, dans lequel
la corrélation entre l'amplitude de mouvement associée au mouvement du deuxième dispositif électronique (105, 404) dans l'environnement ambiant et l'amplitude de mouvement associée à l'environnement virtuel (100A, 100B, 206A, 206B) comprend en outre la possibilité pour au moins une capacité dans l'environnement virtuel (100A, 100B, 206A, 206B) de tenir compte de la position assise d'un utilisateur (102A, 102B, 202A), 202B) l'accès au premier dispositif électronique (104, 204, 402), en réponse à la détermination que l'utilisateur (102A, 102B, 202A, 202B) est en position assise lors de l'accès au premier dispositif électronique (104, 204, 402), ou le suivi du mouvement du deuxième dispositif électronique (105, 404) dans l'environnement ambiant comprend l'analyse des données de l'accéléromètre stockées sur le deuxième dispositif électronique (105, 404).
